# EUROPÄISCHE PATENTSCHRIFT

(11) **EP 1 415 130 B1**
(45) Veröffentlichungstag und Bekanntmachung des Hinweises auf die Patenterteilung: **30.08.2006**
(21) Anmeldenummer: 02767099.1
(22) Anmeldetag: 12.08.2002
(51) Int. Cl.: G01D 5/26, G05G 9/047

(54) **EINRICHTUNG ZUR ERFASSUNG DER RELATIVPOSITION ZWEIER ZUEINANDER BEWEGBARER KÖRPER**
DEVICE FOR DETECTING THE RELATIVE POSITION OF TWO BODIES THAT CAN MOVE IN RELATION TO ONE ANOTHER
DISPOSITIF POUR DETECTER LA POSITION RELATIVE DE DEUX CORPS DEPLA ABLES L'UN PAR RAPPORT A L'AUTRE

(30) Priorität: 10.08.2001 DE 10139878
(43) Veröffentlichungstag der Anmeldung: 06.05.2004
(73) Patentinhaber: Fraunhofer-Gesellschaft zur Förderung der angewandten Forschung e.V., 80686 München (DE)
(72) Erfinder: Prof. Dr. Eckart Uhlmann, 25368 Kibitzreihe (DE); Martin Seibt, 67433 Neustadt a.d. Weinstrasse (DE); Jens Peter Härtwig, 10245 Berlin (DE); Erdmann Schäper, 14057 Berlin (DE)
(74) Vertreter: Baumgärtel, Gunnar
(86) Internationale Anmeldenummer: PCT/DE2002/002991
(87) Internationale Veröffentlichungsnummer: WO 2003/016817

(56) Entgegenhaltungen:
- US-A- 4 574 199
- US-A- 5 181 079
- US-A- 5 489 168
- US-A- 6 081 257
- US-B1- 6 175 357
- PATENT ABSTRACTS OF JAPAN vol. 1999, no. 02, 26. Februar 1999 (1999-02-26) & JP 10 312238 A (NEC CORP), 24. November 1998 (1998-11-24)

## Beschreibung

Die Erfindung betrifft eine Einrichtung zur Erfassung der Relativposition zweier zueinander bewegbarer Körper nach dem Oberbegriff des Patentanspruchs 1.

Hierbei geht es um die Erfassung der Relativposition zweier zueinander bewegbarer Körper, die durch mindestens ein längserstrecktes Verbindungselement miteinander gekoppelt sind, das mit mindestens einem der Körper gelenkig verbunden ist.

Aus der US-6081257 ist eine Vorrichtung nach dem Oberbegriff des Anspruchs 1 bekannt.

Aus der WO 91/03145 A1 ist ein sogenanntes Hexapod (Stewart-Plattform) bekannt, bei dem eine Basis und eine oberhalb dieser Basis angeordnete Plattform über sechs teleskopierbare, längserstreckte Verbindungselemente (Teleskopbeine) miteinander verbunden sind. Die Teleskopbeine sind sowohl an der Basis als auch an der Plattform jeweils in drei Achsen frei drehbar angelenkt, z.B. mittels eines Kugelgelenkes. Durch Einstellung der Länge der einzelnen Teleskopbeine, die z.B. hydraulisch erfolgen kann, ist die Position der Plattform bezüglich der Basis einstellbar. Hierbei dient die Basis zur Aufnahme eines zu bearbeitenden Werkstückes und die Plattform zur Lagerung eines zur Bearbeitung vorgesehenen Werkzeuges, insbesondere einer Maschinenspindel. Die Einstellung der Lage der Plattform relativ zu der Basis durch Einstellung der Länge der Teleskopbeine ist somit gleichbedeutend mit der Einstellung der Lage des Werkzeugs relativ zu dem zu bearbeitenden Werkstück.

Bei einer solchen Anordnung zur Einstellung der Relativposition zweier zueinander beweglicher Körper, nämlich der Einstellung der Plattform relativ zur Basis und damit des Werkzeugs relativ zum Werkstück, sind unterschiedliche Methoden zur Erfassung der jeweiligen Relativposition bekannt. So kann die Länge der Teleskopbeine, die die Relativposition der zueinander bewegbaren Körper bestimmt, durch ein Laser-Interferometer, durch einen Maßstab mit zugeordnetem Abtastkopf oder durch eine Spindel mit einem hierauf gelagerten Drehgeber bestimmt werden. Diese bekannten Methoden haben jedoch den Nachteil, daß eine große Anzahl Meßeinrichtungen erforderlich ist, die die jeweilige Länge der einzelnen Teleskopbeine messen.

Der Erfindung liegt das Problem zugrunde, eine Einrichtung zur Erfassung der Relativposition zweier zueinander bewegbarer Körper der eingangs genannten Art zu schaffen, die sich durch einen einfachen Aufbau auszeichnet.

Dieses Problem wird erfindungsgemäß durch die Schaffung einer Einrichtung mit den Merkmalen des Patentanspruchs 1 gelöst.

Danach umfaßt diese Einrichtung Mittel zur Erzeugung mindestens eines, sich entlang eines Verbindungselementes der beiden Körper erstreckenden Strahlenbündels, die gemeinsam mit dem Verbindungselement bewegbar sind; einen Detektor mit mindestens einer strahlungsempfindlichen Oberfläche, die im Strahlengang des Strahlenbündels angeordnet ist; sowie eine Auswerteeinheit zur Bestimmung der Koordinaten des auf der strahlungsempfindlichen Oberfläche bestrahlten Bereiches.

Die erfindungsgemäße Lösung hat den Vorteil, daß sie mit nur einer Meßeinrichtung, die Bestimmung mehrerer Freiheitsgrade eines Verbindungselementes, insbesondere eines dem Verbindungselement zugeordneten Gelenkes gestattet. Durch die Reduzierung der Anzahl der erforderlichen Meßeinrichtungen zur Bestimmung der einzelnen Freiheitsgrade der Relativbewegung der beiden Körper zueinander wird zugleich die Meßgenauigkeit erhöht, da keine Addition von Meßfehlern unterschiedlicher Meßeinrichtungen auftreten kann, die jeweils zur Bestimmung nur eines der Freiheitsgrade vorgesehen sind.

Je nach der Anzahl der Freiheitsgrade, die mit der erfindungsgemäßen Einrichtung erfaßt werden sollen, können genau ein Strahlenbündel oder mehrere Strahlenbündel erzeugt werden, die jeweils auf die strahlungsempfindliche Oberfläche des zugeordneten Detektors auftreffen. Unter einem Strahlenbündel wird dabei eine Anordnung von Strahlen mit einem zusammenhängenden Querschnitt verstanden, so daß sich eine aus zwei oder mehr Strahlenbündeln bestehende Strahlungsanordnung dadurch auszeichnet, daß die unterschiedlichen Strahlenbündel räumlich voneinander getrennte Strahlungsquerschnitte aufweisen. Die einzelnen Strahlenbündel können dabei sowohl parallel als auch geneigt zueinander verlaufen.

In einer bevorzugten Ausführungsform weist das Strahlenbündel im Querschnitt keine Rotationssymmetrie auf, d.h., das Strahlenbündel ist im Querschnitt derart asymmetrisch, daß es bei einer Drehung um seine Längsachse (Strahlungsachse) mit einem Winkel von weniger als 360° nicht in sich selbst überführbar ist. Bei einer derartigen Ausbildung des Strahlenbündels können bei Erzeugung nur eines Strahlenbündels drei Freiheitsgrade des entsprechenden Verbindungselementes erfaßt werden, insbesondere entweder die drei rotatorischen Freiheitsgrade des Gelenkes des Verbindungselementes oder zwei rotatorische Freiheitsgrade und ein translatorischer Freiheitsgrad im Fall eines längenveränderlichen Verbindungselementes. In einer bevorzugten Ausführungsform ist das Strahlenbündel hierbei im Querschnitt T-förmig ausgebildet.

Anders ausgedrückt ist das mindestens eine Strahlenbündel im Querschnitt derart asymmetrisch ausgebildet ist, dass aus der räumlichen Orientierung des durch das Strahlenbündel auf der strahlungsempfindlichen Oberfläche bestrahlten Bereiches eine Aussage über die Relativposition der beiden zueinander bewegbaren Körper gewonnen werden kann, z.B. indem aus der räumlichen Orientierung des durch das Strahlenbündel auf der strahlungsempfindlichen Oberfläche bestrahlten Bereiches die Winkellage der Mittel zur Erzeugung des Strahlenbündels bezüglich der Längsachse des Verbindungselementes bestimmt wird. Da die Mittel zur Erzeugung des Strahlenbündels an dem Verbindungselement angeordnet sind, sich also gemeinsam mit diesem bewegen, kann aus einer Drehbewegung dieser Mittel (entsprechend einer Änderung von deren Winkellage) auf eine entsprechende Drehung des Verbindungselementes (und somit auf die Änderung von dessen Winkellage) geschlossen werden. Die Lage des Verbindungselementes bestimmt wiederum die Relativposition der beiden über das Verbindungselement gekoppelten Körper.

Bei Erzeugung und Detektion eines zweiten Strahlenbündels lassen sich sogar vier Freiheitsgrade des entsprechenden Verbindungselementes, also die drei rotatorischen Freiheitsgrade seines Gelenkes sowie zusätzlich ein translatorischer Freiheitsgrad im Fall eines längenveränderlichen Verbindungselementes erfassen.

Zur Erzeugung des Strahlenbündels ist vorzugsweise mindestens eine Strahlungsquelle vorgesehen, der ein optisches Element nachgeschaltet ist, das aus der von der Strahlungsquelle ausgesandten elektromagnetischen Strahlung ein definiertes Strahlenbündel erzeugt. Das optische Element kann beispielsweise durch eine Blende gebildet werden, und es kann jeweils ein optisches Element zur Erzeugung eines Strahlenbündels oder auch ein optisches Element zur Erzeugung mehrerer Strahlenbündel dienen.

Für einen kompakten Aufbau der gesamten Anordnung wird das Strahlenbündel vorzugsweise zumindest teilweise innerhalb des entsprechenden Verbindungselementes geführt, so daß dieses als Hohlkörper auszubilden ist.

Zur Einstellung der Länge des Verbindungselementes ist dieses vorzugsweise teleskopierbar ausgebildet.

Die erfindungsgemäße Einrichtung eignet sich sowohl zur Erfassung der Freiheitsgrade der Bewegung eines Verbindungselementes, das mittels eines in drei Achsen verschwenkbaren Gelenkes gelagert ist als auch eines Verbindungselementes, das mittels eines Schub-Drehgelenkes gelagert ist. In diesem Fall wären die beiden rotatorischen und der eine translatorische Freiheitsgrad des Schub-Drehgelenkes zu erfassen sowie ggf. zusätzlich der weitere translatorische Freiheitsgrad eines längenveränderlichen Verbindungselementes.

Die erfindungsgemäße Einrichtung läßt sich insbesondere bei einem Hexapod der eingangs beschriebenen Art anwenden, bei dem die beiden zueinander bewegbaren Körper über mehrere Verbindungselemente (vorzugsweise sechs Verbindungselemente) miteinander gekoppelt sind, die mit jedem der beiden Körper jeweils gelenkverbunden sind.

Die mindestens eine strahlungsempfindliche Oberfläche des Detektors wird vorzugsweise durch eine elektronisch analysierbare Projektionsfläche, insbesondere ein CCD-Array, gebildet.

Die strahlungsempfindliche Oberfläche des Detektors kann in einfacher Weise eben ausgebildet sein. Zur Vermeidung von Verzerrungen ist jedoch eine gekrümmte Ausbildung der strahlungsempfindlichen Oberfläche vorteilhaft. In diesem Fall ist die strahlungsempfindliche Oberfläche derart gekrümmt, daß Verzerrungen des bestrahlten Bereiches der strahlungsempfindlichen Oberfläche des Detektors als Folge von Änderungen der Neigung des Verbindungselementes und damit des entlang des Verbindungselementes verlaufenden Stahlenbündels minimiert werden.

Für die Bestimmung der Relativposition zweier Körper unter Verwendung der erfindungsgemäßen Einrichtung ist keine gepulste Strahlungsquelle erfoderlich, deren Pulse ausgewertet werden müssten. Die erfindungsgemäße Einrichtung kann daher mit Mitteln zur Erzeugung einer nicht-gepulsten, zeitlich kontinuierlichen Strahlung arbeiten. Die Auswertung des auf der strahlungsempfindlichen Oberfläche bestrahlten Bereiches erfolgt demnach allein anhand der Koordinaten dieses Bereiches, nicht aber anhand einer Pulsfolge auftreffender Strahlungspulse.

Eine Einrichtung zur Erfassung der Neigung eines schwenkbar gelagerten Elementes, die insbesondere bei einer Einrichtung zur Erfassung der Relativposition zweier zueinander bewegbarer Körper gemäß Patentanspruch 1 anwendbar ist, wird durch die Merkmale des Patentanspruchs 26 charakterisiert.

Diese Einrichtung umfaßt Mittel zur Erzeugung mindestens eines, sich entlang des schwenkbar gelagerten Elementes erstreckenden Strahlenbündels, die gemeinsam mit diesem Element verschwenkbar sind; einen Detektor mit mindestens einer strahlungsempfindlichen Oberfläche, die im Strahlengang des Strahlenbündels angeordnet ist; sowie eine Auswerteeinheit zur Bestimmung der Koordinaten des auf der strahlungsempfindlichen Oberfläche bestrahlten Bereiches. Hierbei ist das Strahlenbündel im Querschnitt nicht rotationssymmetrisch ausgebildet. Dies ermöglicht die Bestimmung dreier Freiheitsgrade, insbesondere dreier rotatorischer Freiheitsgrade eines in drei Achsen schwenkbar gelagerten Elementes, durch Erzeugung und Auswertung nur eines Strahlenbündels

Diese Einrichtung ist dadurch in ihrem Aufbau einfacher als der in der DE 196 05 573 C2 opto-elektronische Sensor zur Ermittlung der Steuerknüppelposition eines dreiachsig drehpositionierbaren Steuerknüppels.

Die Merkmale der abhängigen Patentansprüche 2 bis 25, die jeweils vorteilhafte Weiterbildungen der Einrichtung zur Erfassung der Relativposition zweier zueinander bewegbarer Körper gemäß Patentanspruch 1 angeben, stellen in gleicher Weise (unabhängig von Patentanspruch 1) auch vorteilhafte Weiterbildungen der Einrichtung zur Erfassung der Neigung eines schwenkbar gelagerten Elementes gemäß Patentanspruch 26 dar.

Eine Vorrichtung zur Positionierung zweier zueinander beweglicher Körper (z.B. in Form eines Hexapods) mit einer erfindungsgemäß ausgestatteten Einrichtung zur Erfassung der Relativposition der beiden Körper ist durch Patentanspruch 29 charakterisiert.

Weitere Merkmale und Vorteile der Erfindung werden bei der nachfolgenden Beschreibung von Ausführungsbeispielen anhand der Figuren deutlich werden.

Es zeigen:
- Fig. 1 -: eine schematische Darstellung einer Einrichtung zur Erfassung der rotatorischen Freiheitsgrade eines Kugelgelenkes;
- Fig. 2 -: einen Detektor mit einer gekrümmten strahlungsempfindlichen Oberfläche für eine Einrichtung gemäß Figur 1;
- Fig. 3 -: eine Einrichtung zur Erfassung dreier rotatorischer Freiheitsgrade eines Kugelgelenkes sowie eines translatorischen Freiheitsgrades eines mit dem Kugelgelenk verbundenen teleskopierbaren Elementes;
- Fig. 4 -: einen Detektor mit einer gekrümmten strahlungsempfindlichen Oberfläche für eine Einrichtung gemäß Figur 3;
- Fig. 5 -: eine Einrichtung zur Erfassung zweier rotatorischer und eines translatorischen Freiheitsgrades eines Schub-Drehgelenkes sowie eines translatorischen Freiheitsgrades eines hiermit verbundenen teleskopierbaren Elementes;
- Fig. 6 -: einen Detektor mit einer gekrümmten strahlungsempfindliche Oberfläche für eine Einrichtung gemäß Figur 5;
- Fig. 7 -: eine schematische Darstellung eines Hexapods.

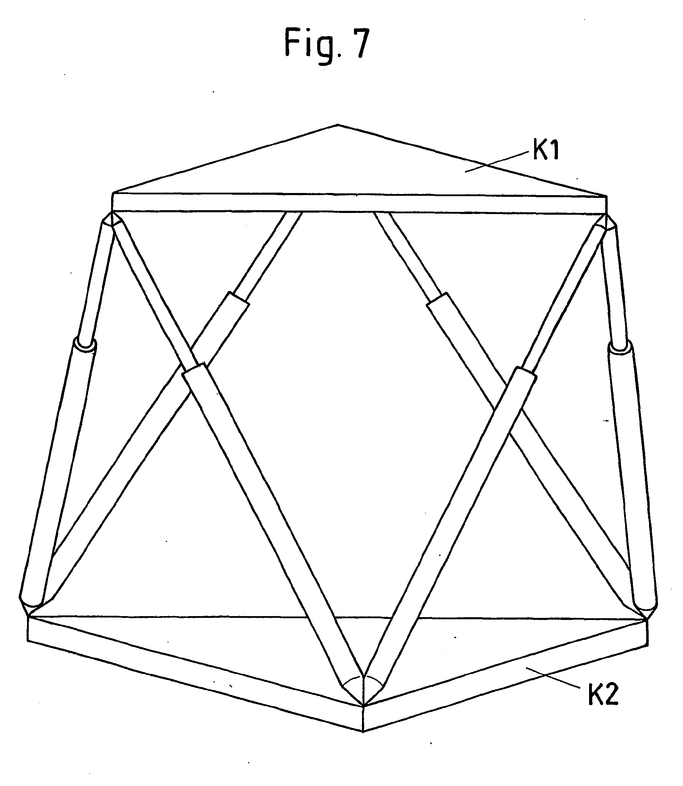

In Figur 7 ist schematisch in perspektivischer Darstellung ein Hexapod (Stewart-Plattform) gezeigt, das aus einer Basis K2 und einer von der Basis K2 beabstandet angeordneten Plattform K1 besteht.

Die Basis K2 und die Plattform K1 sind über insgesamt sechs längserstreckte, längenveränderliche Verbindungselemente V in Form von Teleskopbeinen miteinander verbunden, die an ihren beiden Enden jeweils über Gelenke G (insbesondere Kugelgelenke) in drei Achsen schwenkbar einerseits an der Basis K2 und andererseits an der Plattform K1 angelenkt sind. Die Einstellung der Länge der Verbindungselemente V kann z.B. hydraulisch erfolgen.

Durch Einstellung der Länge der einzelnen Verbindungselemente V kann die Lage der Plattform K1 relativ zu der Basis K2 festgelegt werden. Eine derartige Anordnung kann etwa verwendet werden, um ein an der Plattform K1 gelagertes Werkzeug, insbesondere eine Spindel einer Werkzeugmaschine, bezüglich eines auf der Basis K2 angeordneten Werkstückes zu positionieren. Für weitere Einzelheiten wird diesbezüglich beispielhaft auf die WO 91/03145 A1 verwiesen, in der ein Hexapod der in Figur 7 schematisch dargestellten Art sowohl hinsichtlich des Aufbaus als auch hinsichtlich möglicher Anwendungen ausführlich beschrieben ist.

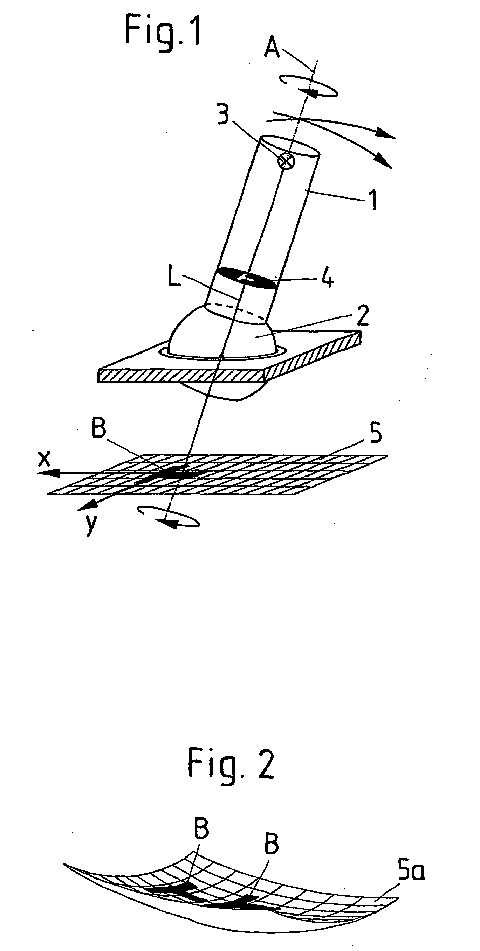

Vorliegend ist von Bedeutung, wie die jeweils eingestellte Lage der Plattform K1 bezüglich der Basis K2 erfaßt wird. Dies wird nachfolgend anhand der Figuren 1 bis 6 näher erläutert werden.

Figur 1 zeigt schematisch ein Ende eines Verbindungselementes 1, das zur Verbindung zweier Körper K1, K2 in einer Anordnung gemäß Figur 7 dienen kann. Ein Endabschnitt 11 des Verbindungselementes 1 ist mittels eines Kugellagers 2 in drei Achsen drehbar gelagert. Das heißt, das längserstreckte Verbindungselement 1 ist sowohl um seine Längsachse A drehbar als auch um die beiden, eine senkrecht zur Längsachse A verlaufende Ebene aufspannenden Achsen.

Zur Bestimmung der rotatorischen Freiheitsgrade des gelenkig gelagerten Verbindungselementes 1 weist dieses eine Strahlungsquelle 3 zur Erzeugung elektromagnetischer Strahlung, insbesondere von Licht auf, die innerhalb des als Hohlkörper (Hohlzylinder) ausgebildeten Verbindungselementes 1 angeordnet und daher gemeinsam mit diesem bewegbar ist. Die Strahlungsquelle 3 erzeugt eine elektromagnetische Strahlung, die in Richtung auf das Kugelgelenk 2 abgestrahlt wird, wobei das Kugelgelenk 2 so ausgebildet ist, daß die elektromagnetische Strahlung dieses durchdringen kann. Hinter der Strahlungsquelle 3 und vor dem Kugelgelenk 2 ist in dem Verbindungselement 1 ein optisches Element in Form einer Blende 4 angeordnet, die sich gemeinsam mit dem Verbindungselement 1 bewegt und die aus der einfallenden elektromagnetischen Strahlung ein im Querschnitt T-förmiges Lichtbündel L erzeugt (Projektion eines Strahlenbündels entlang eines Achsschenkels).

Dieses im Querschnitt T-förmige Lichtbündel L trifft hinter dem Kugelgelenk 2 auf eine strahlungsempfindliche Oberfläche 5 eines ortsfest angeordneten (d.h. nicht gemeinsam mit dem Verbindungselement 1 verschwenkbaren) Detektors auf und erzeugt und bestrahlt dort einen T-förmigen Bereich B. Die strahlungsempfindliche Oberfläche 5 des Detektors erstreckt sich in einer xy-Ebene, die senkrecht zur Erstreckungsrichtung des Verbindungselementes 1 verläuft, wenn dieses senkrecht aufgestellt ist, also die kürzeste Verbindungsstrecke zwischen den beiden Körpern K1, K2 gemäß Figur 7 bilden würde.

Aus der Position und Orientierung des beleuchteten Bereiches B auf der strahlungsempfindlichen Oberfläche 5, bei der es sich beispielsweise um ein elektronisch analysierbares CCD-Array handeln kann, lassen sich alle drei rotatorischen Freiheitsgrade α, β, δ des Kugelgelenkes 2 bestimmen, die jeweils einer Drehung um eine der drei Drehachsen des Kugelgelenkes 2 entsprechen. Hierzu wird das Ausgangssignal des Detektors einer geeigneten Auswerteeinrichtung in Form eines Mikroprozessors zugeführt. Aufgrund der nicht-rotationssymmetrischen Ausbildung des im Querschnitt T-förmigen Lichtbündels L lassen sich Drehungen um die Längsachse A des Verbindungselementes 1, die zu einer entsprechenden Drehung des beleuchteten Bereiches B der strahlungsempfindlichen Oberfläche 5 führen, von den eine Drehung um die beiden anderen Drehachsen repräsentierenden Freiheitsgraden α, β unterscheiden, die lediglich zu einer Verschiebung des beleuchteten Bereiches B entlang einer Achse x bzw. y der strahlungsempfindlichen Oberfläche 5 führen. Entscheidend dafür, daß mit nur einem Lichtbündel L alle drei rotatorischen Freiheitsgrade α, β, *δ* des Kugelgelenkes 2 erfaßt werden können, ist also die nicht-rotationssymmetrische Ausbildung des Lichtbündels L.

Im Ergebnis können also aufgrund der nicht-rotationssymmetrischen Ausbildung des Lichtbündels L insgesamt drei Freiheitsgrade auf eine zweidimensionale Projektionsfläche abgebildet werden, wobei zwei Freiheitsgrade durch die Position des beleuchteten Bereiches B auf der Projektionsfläche und ein dritter Freiheitsgrad durch die Orientierung des beleuchteten Bereiches B auf der Projektionsfläche bestimmbar ist.

Figur 2 zeigt eine Abwandlung der in Figur 1 dargestellten strahlungsempfindlichen Oberfläche 5. Die in Figur 2 dargestellte strahlungsempfindliche Oberfläche 5a bildet eine gekrümmte Projektionsfläche für das Lichtbündel L, wobei die Krümmung derart gewählt ist, daß der beleuchtete Bereich B der strahlungsempfindlichen Oberfläche 5a unabhängig von dessen Lage auf der strahlungsempfindlichen Oberfläche stets die gleiche Größe aufweist. Es werden hier also Verzerrungen unterdrückt, die hinsichtlich der Größe des beleuchteten Bereiches B mit zunehmender Neigung des Verbindungselementes 1 (vgl. Figur 1) bezüglich der Senkrechten z auftreten.

Eine gekrümmte Projektionsfläche für das Lichtbündel L läßt sich beispielsweise durch Verwendung einer CCD-Folie oder durch Verwendung eines gekrümmten Substrates für ein CCD-Array erreichen.

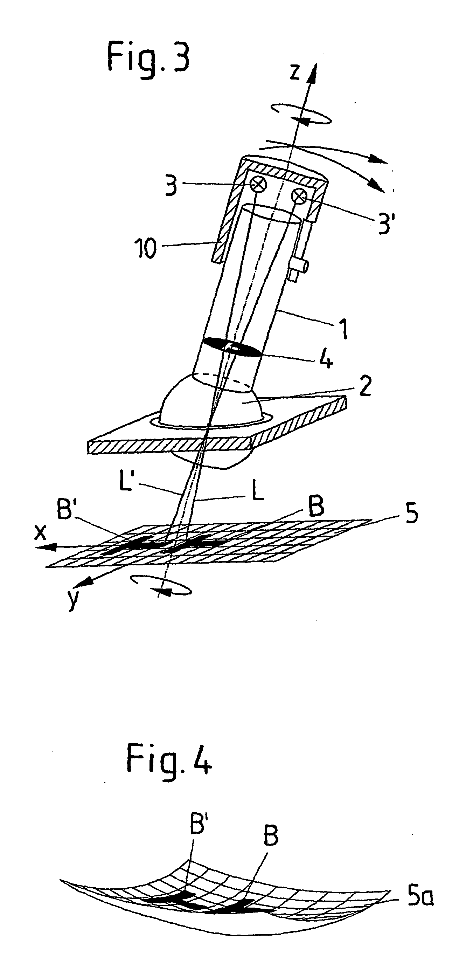

Figur 3 zeigt eine Abwandlung des Ausführungsbeispiels aus Figur 1.

Zum einen handelt es sich hier um ein teleskopierbares Verbindungselement 1, das aus zwei teleskopartig ineinandergreifenden, in Längsrichtung zueinander verschiebbaren hohlzylindrischen Elementen 10, 11 besteht. Zum anderen sind hier zwei Strahlungsquellen 3, 3' zur Erzeugung elektromagnetischer Strahlung vorgesehen, die an dem einen (10) der beiden hohlzylindrischen Elemente 10, 11 vorgesehen sind. Die von den beiden Strahlungsquellen 3, 3' ausgesandte elektromagnetische Strahlung (insbesondere Licht) trifft wie bei dem Ausführungsbeispiel gemäß Figur 1 auf eine Blende 4, die vorliegend in dem anderen (11) der beiden hohlzylindrischen Element 11, 12 angeordnet ist. Da die von den beiden Strahlungsquellen 3, 3' ausgesandte elektromagnetische Strahlung geneigt zueinander verläuft, werden durch die Blende 4 zwei geneigt zueinander verlaufende, im Querschnitt T-förmige Lichtbündel L, L' erzeugt, die auf die hinter dem Kugelgelenk 2 angeordnete strahlungsempfindliche Oberfläche 5 treffen und dort jeweils einen Bereich B bzw. B' beleuchten. Hierbei kann selbstverständlich auch für die von den beiden Strahlungsquellen 3, 3' ausgesandte elektromagnetische Strahlung jeweils eine eigene Blende vorgesehen sein.

Aus der Lage der beiden beleuchteten Bereiche B, B' zueinander (insbesondere deren Abstand) läßt sich zusätzlich zu den drei rotatorischen Freiheitsgraden noch ein translatorischer Freiheitsgrad erfassen, nämlich die Länge des Verbindungselementes 1, entsprechend der Verschiebung der beiden hohlzylindrischen Elemente 10, 11 zueinander entlang dessen Längsachse A. Dies ist darauf zurückzuführen, daß sich bei einer Änderung der Länge des Verbindungselementes 1 der Abstand der beiden Strahlungsquellen 3, 3' von der strahlungsempfindlichen Oberfläche 5 ändert, so daß aufgrund des zueinander geneigten Verlaufes der beiden Lichtbündel L, L' auch deren Abstand in der Ebene der strahlungsempfindlichen Oberfläche 5 variiert.

Vorliegend können also mit nur zwei Stahlenbündeln L, L' insgesamt vier Freiheitsgrade des teleskopierbaren Verbindungselementes 1 und des zugehörigen Kugelgelenkes 2 erfaßt werden.

Figur 4 zeigt wiederum eine mögliche gekrümmte Ausbildung einer strahlungsempfindlichen Oberfläche 5a, wobei die Krümmung derart gewählt ist, daß die durch die Lichtbündel L, L' beleuchteten Bereiche B, B' der durch die strahlungsempfindliche Oberfläche gebildeten Projektionsfläche unabhängig von der Neigung des Verbindungselementes 1 stets die gleiche Größe aufweisen.

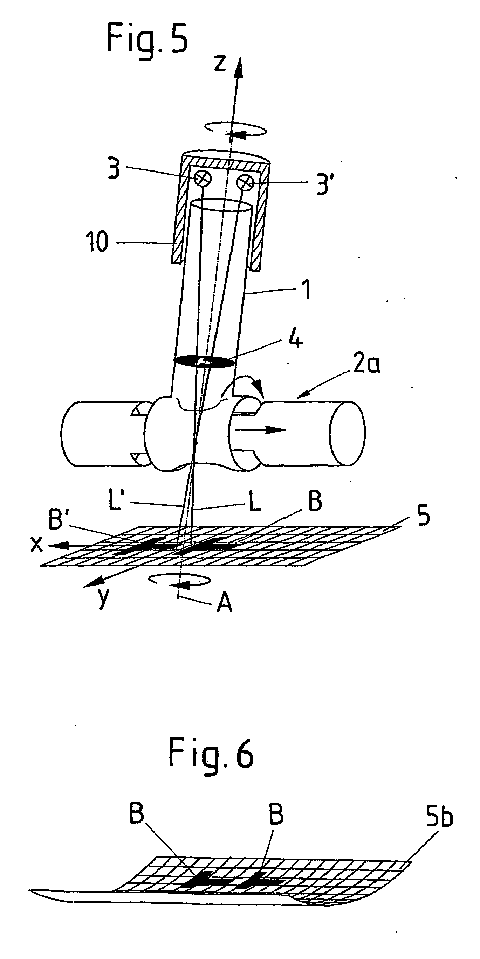

Figur 5 zeigt eine Abwandlung des Ausführungsbeispiels aus Figur 3, wobei das teleskopierbare Verbindungselement 1 nicht mittels eines Kugelgelenkes 2 sondern mittels eines Schub-Drehgelenkes 2a gelagert ist. Dieses Schub-Drehgelenk 2a gestattet eine Schwenkbewegung des Verbindungselementes 1 um zwei Achsen, darunter dessen Längsachse A, entsprechend zwei rotatorischen Freiheitsgraden β, δ, sowie eine Verschiebung des Verbindungselementes 1 in einer Richtung senkrecht zur Vertikalen z.

Die drei durch das Schub-Drehgelenk 2a definierten Freiheitsgrade (zwei rotatorische Freiheitsgrade und ein translatorischer Freiheitsgrad) könnten durch ein einzelnes, im Querschnitt nicht-rotationssymmetrisches Lichtbündel L erfaßt werden. Die Verwendung zweier Lichtbündel L, L' ermöglicht darüber hinaus die Bestimmung der Länge des teleskopierbaren Verbindungselementes 1.

Figur 6 zeigt wiederum eine gekrümmte Ausbildung der durch die strahlungsempfindliche Oberfläche 5b definierten Projektionsfläche für die elektromagnetische Strahlung, mit der Verzerrungen bei unterschiedlicher Neigung des Verbindungselementes 1 vermieden werden können.

Zusammenfassend haben die in den Figuren 1 bis 6 dargestellten Einrichtungen zur Positionserfassung den Vorteil, daß mit jeweils nur einer Sensoreinrichtung drei Freiheitsgrade (bei Verwendung eines Lichtbündels) bzw. vier Freiheitsgrade (bei Verwendung von zwei Lichtbündeln) einer Bewegung bestimmbar sind. Dies bedeutet, daß bei Verwendung zweier solcher Einrichtungen die jeweilige Position der beiden in Figur 7 dargestellten Körper K1, K2 zueinander (entsprechend sechs Freiheitsgraden) bestimmbar ist. Denn bei Bestimmung mehrerer Freiheitsgrade (und nicht nur der Länge, wie im Stand der Technik üblich) eines der teleskopierbaren Verbindungselemente läßt sich hieraus eindeutig auf die Lage der beiden Körper K1, K2 zueinander schließen.

## Patentansprüche

1. Einrichtung zur Erfassung der Relativposition zweier zueinander bewegbarer Körper (K₁,K₂), die durch mindestens ein längserstrecktes Verbindungselement miteinander gekoppelt sind, das mit mindestens einem der Körper gelenkig verbunden ist, mit
- Mitteln (3, 3', 4) zur Erzeugung mindestens eines, sich entlang des Verbindungselementes (1) erstreckenden Strahlenbündels (L, L'), die gemeinsam mit dem Verbindungselement (1) bewegbar sind,
- einem Detektor mit einer strahlungsempfindlichen Oberfläche (5, 5a, 5b), die im Strahlengang des Strahlenbündels angeordnet ist, und
- einer Auswerteeinheit zur Bestimmung der Koordinaten des auf der strahlungsempfindlichen Oberfläche (5, 5a, 5b) bestrahlten Bereiches (B, B'),
**dadurch gekennzeichnet,**
**dass** das Strahlenbündel (L, L') im Querschnitt nicht rotationssymmetrisch ausgebildet ist.

2. Einrichtung nach Anspruch 1, **dadurch gekennzeichnet, dass** genau ein Strahlenbündel (L) erzeugt wird.

3. Einrichtung nach Anspruch 1, **dadurch gekennzeichnet, dass** mindestens zwei, zumindest abschnittsweise räumlich voneinander getrennte Strahlenbündel (L, L') erzeugt werden.

4. Einrichtung nach Anspruch 3, **dadurch gekennzeichnet, dass** die beiden Strahlenbündel parallel zueinander verlaufen.

5. Einrichtung nach Anspruch 3, **dadurch gekennzeichnet, dass** die beiden Strahlenbündel (L, L') geneigt, insbesondere in einem spitzen Winkel geneigt, zueinander verlaufen.

6. Einrichtung nach einem der vorhergehenden Ansprüche, **dadurch gekennzeichnet, dass** das Strahlenbündel (L, L') im Querschnitt derart asymmetrisch ist, dass es bei keiner Drehung um seine Längsachse (A) mit einem Winkel von weniger als 360° in sich selbst überführbar ist.

7. Einrichtung nach Anspruch 6, **dadurch gekennzeichnet, dass** das mindestens eine Strahlenbündel (L, L') im Querschnitt T-förmig ausgebildet ist.

8. Einrichtung nach einem der vorhergenden Ansprüche, **dadurch gekennzeichnet, dass** das mindestens eine Strahlenbündel (L, L') im Querschnitt derart asymmetrisch ausgebildet ist, dass aus der räumlichen Orientierung des durch das Strahlenbündel (L, L') auf der strahlungsempfindlichen Oberfläche (5, 5a, 5b) bestrahlten Bereiches (B, B') eine Aussage über die Relativposition der beiden zueinander bewegbaren Körper gewonnen werden kann.

9. Einrichtung nach einem der vorhergehenden Ansprüche, **dadurch gekennzeichnet, dass** das mindestens eine Strahlenbündel (L, L') im Querschnitt derart asymmetrisch ausgebildet ist, dass aus der räumlichen Orientierung des durch das Strahlenbündel (L, L') auf der strahlungsempfindlichen Oberfläche (5, 5a, 5b) bestrahlten Bereiches (B, B') die Winkellage der Mittel (3, 3', 4) zur Erzeugung des Strahlenbündels (L, L') bezüglich der Längsachse (A) des Verbindungselementes (1) bestimmbar ist, so dass eine Drehung des Verbindungselementes (1) um seine Längsachse (A) erfasst wird.

10. Einrichtung nach einem der vorhergehenden Ansprüche, **dadurch gekennzeichnet, dass** mindestens eine Strahlungsquelle (3, 3') zur Erzeugung elektromagnetischer Strahlung vorgesehen ist und dass der Strahlungsquelle (3, 3') mindestens ein optisches Element (4) nachgeschaltet ist, das aus der elektromagnetischen Strahlung ein definiertes Strahlenbündel (L, L') erzeugt.

11. Einrichtung nach Anspruch 10, **dadurch gekennzeichnet, dass** das optische Element (4) durch eine Blende gebildet wird.

12. Einrichtung nach einem der Ansprüche 3 bis 11, **dadurch gekennzeichnet, dass** mehreren Strahlenbündeln (L, L') ein gemeinsames optisches Element (4) zugeordnet ist.

13. Einrichtung nach einem der Ansprüche 3 bis 12, **dadurch gekennzeichnet, dass** jedem Strahlenbündel (L, L') ein separates optisches Element zugeordnet ist.

14. Einrichtung nach einem der vorhergehenden Ansprüche, **dadurch gekennzeichnet, dass** das mindestens eine Strahlenbündel (L, L') zumindest teilweise innerhalb des Verbindungselements (1) geführt ist.

15. Einrichtung nach einem der vorhergehenden Ansprüche, **dadurch gekennzeichnet, dass** die Länge des Verbindungselementes (1) einstellbar ist und dass aus den Koordinaten des auf der strahlungsempfindlichen Oberfläche (5, 5a, 5b) bestrahlten Bereiches (B, B') die Länge des Verbindungselementes (1) bestimmbar ist.

16. Einrichtung nach Anspruch 15, **dadurch gekennzeichnet, dass** das Verbindungselement (1) teleskopierbar ist.

17. Einrichtung nach einem der vorhergehenden Ansprüche, **dadurch gekennzeichnet, dass** das Verbindungselement (1) mindestens ein Gelenk (2) aufweist, das in drei Achsen (x, y, z) verschwenkbar ist.

18. Einrichtung nach einem der vorhergehenden Ansprüche, **dadurch gekennzeichnet, dass** das Verbindungselement (1) mindestens ein Schub-Drehgelenk (2a) aufweist.

19. Einrichtung nach einem der vorhergehenden Ansprüche, **dadurch gekennzeichnet, dass** das Verbindungselement (1) an seinen beiden Enden (1a, 1b) jeweils ein Gelenk aufweist, über das es mit einem der Körper (K1, K2) gelenkverbunden ist.

20. Einrichtung nach einem der vorhergehenden Ansprüche, **dadurch gekennzeichnet, dass** die beiden Körper (K1, K2) über mehrere Verbindungselemente (1), insbesondere sechs Verbindungselemente, miteinander gekoppelt sind.

21. Einrichtung nach einem der vorhergehenden Ansprüche, **dadurch gekennzeichnet, dass** die strahlungsempfindliche Oberfläche (5, 5a, 5b) des Detektors durch eine elektronisch analysierbare Projektionsfläche, insbesondere ein CCD-Array, gebildet wird.

22. Einrichtung nach einem der vorhergehenden Ansprüche, **dadurch gekennzeichnet, dass** die strahlungsempfindliche Oberfläche (5) eben ausgebildet ist.

23. Einrichtung nach einem der vorhergehenden Ansprüche, **dadurch gekennzeichnet, dass** die strahlungsempfindliche Oberfläche (5a, 5b) gekrümmt ausgebildet ist.

24. Einrichtung nach Anspruch 23, **dadurch gekennzeichnet, dass** die strahlungsempfindliche Oberfläche (5a, 5b) derart gekrümmt ausgebildet ist, dass Verzerrungen des bestrahlten Bereiches (B, B') der Oberfläche als Folge von Änderungen der Neigung des Verbindungselementes (1) minimiert werden.

25. Einrichtung nach einem der vorhergehenden Ansprüche, **dadurch gekennzeichnet, dass** die beiden Körper (K1, K2) jeweils als Träger, insbesondere als plattenförmige Träger, ausgebildet sind.

26. Einrichtung zur Erfassung der Neigung eines schwenkbar gelagerten Elementes mit
- Mitteln (3, 3', 4) zur Erzeugung mindestens eines, sich entlang des schwenkbar gelagerten Elementes (1) erstreckenden Strahlenbündels (L, L'), die gemeinsam mit diesem Element (1) verschwenkbar sind,
- einem Detektor mit einer strahlungsempfindlichen Oberfläche (5, 5a, 5b), die im Strahlengang des Strahlenbündels (L, L') angeordnet ist, und
- einer Auswerteeinheit zur Bestimmung der Koordinaten des auf der strahlungsempfindlichen Oberfläche (5, 5a, 5b) bestrahlten Bereiches (B, B'),
wobei das Strahlenbündel (L, L') im Querschnitt nicht rotationssymmetrisch ausgebildet ist.

27. Einrichtung nach Anspruch 26, **dadurch gekennzeichnet, dass** das Strahlenbündel (L, L') im Querschnitt derart asymmetrisch ist, dass es bei keiner Drehung um seine Längsachse (A) mit einem Winkel von weniger als 360° in sich selbst überführbar ist.

28. Einrichtung nach Anspruch 26 oder. 27 mit den kennzeichnenden Merkmalen mindestens eines der Ansprüche 1 bis 25.

29. Vorrichtung zur Positionierung zweier zueinander beweglicher Körper mit einer Einrichtung zur Erfassung der Relativposition der Körper nach einem der Ansprüche 1 bis 25.

## Claims

1. Device for detecting the relative position of two bodies (K₁, K₂) that can move in relation to one another and are coupled to one another by means of an elongated connecting element which is connected in an articulated fashion to at least one of the bodies, having
- means (3, 3', 4) for generating at least one beam (L, L') which extends along the connecting element (1) and can be moved in common with the connecting element (1),
- a detector with a radiation-sensitive surface (5, 5a, 5b) which is arranged in the beam path of the beam, and
- an evaluation unit for determining the coordinates of the region (B, B') irradiated on the radiation-sensitive surface (5, 5a, 5b),
**characterized**
**in that** the beam (L, L') is not of rotationally symmetrical design in cross section.

2. Device according to Claim 1, **characterized in that** exactly one beam (L) is generated.

3. Device according to Claim 1, **characterized in that** at least two beams (L, L') are generated which are spatially separated from one another at least in sections.

4. Device according to Claim 3, **characterized in that** the two beams run parallel to one another.

5. Device according to Claim 3, **characterized in that** the two beams (L, L') run in a mutually inclined fashion, in particular inclined at an acute angle.

6. Device according to one of the preceding claims, **characterized in that** the beam (L, L') is of asymmetric cross section in such a way that it cannot be transformed into itself in any rotation about its longitudinal axis (A) with an angle of less than 360°.

7. Device according to Claim 6, **characterized in that** the at least one beam (L, L') is of T-shaped design in cross section.

8. Device according to one of the preceding claims, **characterized in that** the at least one beam (L, L') is of asymmetric design in cross section in such a way that it is possible to obtain a statement relating to the relative position of the two bodies that can move in relation to one another from the spatial orientation of the region (B, B') irradiated on the radiation-sensitive surface (5, 5a, 5b) by the beam (L, L').

9. Device according to one of the preceding claims, **characterized in that** the at least one beam (L, L') is of asymmetric design in cross section in such a way that it is possible to use the spatial orientation of the region (B, B') irradiated on the radiation-sensitive surface (5, 5a, 5b) by the beam (L, L') in order to determine the angular position of the means (3, 3', 4) for generating the beam (L, L') relative to the longitudinal axis (A) of the connecting element (1), such that a rotation of the connecting element (1) about its longitudinal axis (A) is detected.

10. Device according to one of the preceding claims, **characterized in that** at least one radiation source (3, 3') is present for generating electromagnetic radiation, and **in that** provided downstream of the radiation source (3, 3') is at least one optical element (4) which generates a defined beam (L, L') from the electromagnetic radiation.

11. Device according to Claim 10, **characterized in that** the optical element (4) is formed by a diaphragm.

12. Device according to one of Claims 3 to 11, **characterized in that** a number of beams (L, L') are assigned a common optical element (4).

13. Device according to one of Claims 3 to 12, **characterized in that** each beam (L, L') is assigned a separate optical element.

14. Device according to one of the preceding claims, **characterized in that** the at least one beam (L, L') is guided at least partially inside the connecting element (1).

15. Device according to one of the preceding claims, **characterized in that** the length of the connecting element (1) can be set, and **in that** the length of the connecting element (1) can be determined from the coordinates of the region (B, B') irradiated on the radiation-sensitive surface (5, 5a, 5b).

16. Device according to Claim 15, **characterized in that** the connecting element (1) can be telescoped.

17. Device according to one of the preceding claims, **characterized in that** the connecting element (1) has at least one articulation (2) which can be pivoted into three axes (x, y, z).

18. Device according to one of the preceding claims, **characterized in that** the connecting element (1) has at least one sliding rotary joint (2a).

19. Device according to one of the preceding claims, **characterized in that** the connecting element (1) has in each case at both its ends (1a, 1b) a joint via which it is connected in an articulate fashion to one of the bodies (K1, K2).

20. Device according to one of the preceding claims, **characterized in that** the two bodies (K1, K2) are coupled to one another via a number of connecting elements (1), in particular six connecting elements.

21. Device according to one of the preceding claims, **characterized in that** the radiation-sensitive surface (5, 5a, 5b) of the detector is formed by an electronically analysable projection surface, in particular a CCD array.

22. Device according to one of the preceding claims, **characterized in that** the radiation-sensitive surface (5) is of planar design.

23. Device according to one of the preceding claims, **characterized in that** the radiation-sensitive surface (5a, 5b) is of curved design.

24. Device according to Claim 23, **characterized in that** the radiation-sensitive surface (5a, 5b) is of curved design in such a way as to minimize distortions of the irradiated region (B, B') of the surface as a consequence of changes in the inclination of the connecting element (1).

25. Device according to one of the preceding claims, **characterized in that** the two bodies (K1, K2) are designed in each case as supports, in particular as plate-shaped supports.

26. Device for detecting the inclination of a swivelably mounted element, having
- means (3, 3', 4) for generating at least one beam (L, L') which extends along the swivelably mounted element (1) and can be pivoted in common with this element (1),
- a detector with a radiation-sensitive surface (5, 5a, 5b) which is arranged in the beam path of the beam (L, L'), and
- an evaluation unit for determining the coordinates of the region (B, B') irradiated on the radiation-sensitive surface (5, 5a, 5b),
the beam (L, L') not being of rotationally symmetrical design in cross section.

27. Device according to Claim 26, **characterized in that** the beam (L, L') is of asymmetric cross section in such a way that it cannot be transformed into itself in any rotation about its longitudinal axis (A) with an angle of less than 360°.

28. Device according to Claim 26 or 27, having the characterizing features of at least one of Claims 1 to 25.

29. Apparatus for positioning two bodies that can move in relation to one another, having a device for detecting the relative position of the bodies according to one of Claims 1 to 25.

## Revendications

1. Dispositif pour détecter la position relative de deux corps (K₁, K₂) mobiles l'un par rapport à l'autre, lesquels sont reliés entre eux par le biais d'au moins un élément de liaison allongé qui est relié de manière articulée avec au moins l'un des corps, comprenant
- un moyen (3, 3', 4) destiné à générer au moins un faisceau de rayons (L, L') qui s'étend le long de l'élément de liaison (1) et pouvant être déplacé en même temps que l'élément de liaison (1),
- un détecteur comportant une surface sensible au rayonnement (5, 5a, 5b) qui est disposée dans le trajet du faisceau de rayons et
- une unité d'interprétation destinée à déterminer les coordonnées de la zone (B, B') irradiée sur la surface sensible au rayonnement (5, 5a, 5b),
**caractérisé en ce**
**que** le faisceau de rayons (L, L') ne présente pas une section transversale à symétrie rotationnelle.

2. Dispositif selon la revendication 1, **caractérisé en ce que** précisément un faisceau de rayons (L) est généré.

3. Dispositif selon la revendication 1, **caractérisé en ce qu'**au moins deux faisceaux de rayons (L, L'), séparés l'un de l'autre dans l'espace au moins par section, sont générés.

4. Dispositif selon la revendication 3, **caractérisé en ce que** les deux faisceaux de rayons s'étendent parallèlement l'un à l'autre.

5. Dispositif selon la revendication 3, **caractérisé en ce que** les deux faisceaux de rayons (L, L') s'étendent de manière inclinée, notamment inclinés selon un angle aigu l'un par rapport à l'autre.

6. Dispositif selon l'une des revendications précédentes, **caractérisé en ce que** le faisceau de rayons (L, L') présente une section transversale asymétrique telle qu'en l'absence de rotation autour de son axe longitudinal (A), il peut être transféré dans lui-même avec un angle de moins de 360°.

7. Dispositif selon la revendication 6, **caractérisé en ce que** l'au moins un faisceau de rayons (L, L') présente une section transversale en forme de T.

8. Dispositif selon l'une des revendications précédentes, **caractérisé en ce que** l'au moins un faisceau de rayons (L, L') présente une section transversale de configuration asymétrique telle que l'orientation dans l'espace de la zone (B, B') irradiée par le faisceau de rayons (L, L') sur la surface sensible au rayonnement (5, 5a, 5b) permet d'obtenir une indication sur la position relative des deux corps mobiles l'un par rapport à l'autre.

9. Dispositif selon l'une des revendications précédentes, **caractérisé en ce que** l'au moins un faisceau de rayons (L, L') présente une section transversale de configuration asymétrique telle que l'orientation dans l'espace de la zone (B, B') irradiée par le faisceau de rayons (L, L') sur la surface sensible au rayonnement (5, 5a, 5b) permet de déterminer la position angulaire du moyen (3, 3', 4) destiné à générer le faisceau de rayons (L, L') par rapport à l'axe longitudinal (A) de l'élément de liaison (1) de manière à détecter une rotation de l'élément de liaison (1) autour de son axe longitudinal (A).

10. Dispositif selon l'une des revendications précédentes, **caractérisé en ce qu'**il est prévu au moins une source de rayonnement (3, 3') destinée à générer un rayonnement électromagnétique et qu'au moins un élément optique (4) est monté à la suite de la source de rayonnement (3, 3'), lequel génère un faisceau de rayons (L, L') donné à partir du rayonnement électromagnétique.

11. Dispositif selon la revendication 10, **caractérisé en ce que** l'élément optique (4) est formé par un obturateur.

12. Dispositif selon l'une des revendications 3 à 11, **caractérisé en ce qu'**un élément optique (4) commun est associé à plusieurs faisceaux de rayons (L, L').

13. Dispositif selon l'une des revendications 3 à 12, **caractérisé en ce qu'**un élément optique séparé est associé à chaque faisceau de rayons (L, L').

14. Dispositif selon l'une des revendications précédentes, **caractérisé en ce qu'**au moins un faisceau de rayons (L, L') est acheminé au moins partiellement à l'intérieur de l'élément de liaison (1).

15. Dispositif selon l'une des revendications précédentes, **caractérisé en ce que** la longueur de l'élément de liaison (1) est réglable et que la longueur de l'élément de liaison (1) peut être déterminée à partir des cordonnées de la zone (B, B') irradiée sur la surface sensible au rayonnement (5, 5a, 5b).

16. Dispositif selon la revendication 15, **caractérisé en ce que** l'élément de liaison (1) est télescopique.

17. Dispositif selon l'une des revendications précédentes, **caractérisé en ce que** l'élément de liaison (1) présente au moins une articulation (2) qui peut pivoter dans trois axes (x, y, z).

18. Dispositif selon l'une des revendications précédentes, **caractérisé en ce que** l'élément de liaison (1) présente au moins une articulation tournante à glissière (2a).

19. Dispositif selon l'une des revendications précédentes, **caractérisé en ce que** l'élément de liaison (1) présente à ses deux extrémités (1a, 1b) à chaque fois une articulation par le biais de laquelle il est relié de manière articulée avec l'un des corps (K1, K2).

20. Dispositif selon l'une des revendications précédentes, **caractérisé en ce que** les deux corps (K1, K2) sont reliés entre eux par le biais de plusieurs éléments de liaison (1), notamment six éléments de liaison.

21. Dispositif selon l'une des revendications précédentes, **caractérisé en ce que** la surface sensible au rayonnement (5, 5a, 5b) du détecteur est formée par une surface de projection pouvant être analysée de manière électronique, notamment une matrice CCD.

22. Dispositif selon l'une des revendications précédentes, **caractérisé en ce que** la surface sensible au rayonnement (5) est de forme plane.

23. Dispositif selon l'une des revendications précédentes, **caractérisé en ce que** la surface sensible au rayonnement (5a, 5b) est de forme incurvée.

24. Dispositif selon la revendication 23, **caractérisé en ce que** la surface sensible au rayonnement (5a, 5b) est de forme incurvée de telle sorte que les déformations de la zone irradiée (B, B') de la surface sont réduites en conséquence de la modification de l'inclinaison de l'élément de liaison (1).

25. Dispositif selon l'une des revendications précédentes, **caractérisé en ce que** les deux corps (K1, K2) sont respectivement réalisés sous la forme d'un support, notamment d'un support en forme de plateau.

26. Dispositif pour détecter l'inclinaison d'un élément monté de manière à pouvoir pivoter comprenant
- un moyen (3, 3', 4) destiné à générer au moins un faisceau de rayons (L, L') qui s'étend le long de l'élément de liaison (1) monté de manière à pouvoir pivoter et pouvant être pivoté en même temps que cet élément (1),
- un détecteur comportant une surface sensible au rayonnement (5, 5a, 5b) qui est disposée dans le trajet du faisceau de rayons (L, L') et
- une unité d'interprétation destinée à déterminer les coordonnées de la zone (B, B') irradiée sur la surface sensible au rayonnement (5, 5a, 5b),
le faisceau de rayons (L, L') ne présentant pas une section transversale à symétrie rotationnelle.

27. Dispositif selon la revendication 26, **caractérisé en ce que** le faisceau de rayons (L, L') présente une section transversale asymétrique telle qu'en l'absence de rotation autour de son axe longitudinal (A), il peut être transféré dans lui-même avec un angle de moins de 360°.

28. Dispositif selon la revendication 26 ou 27 ayant les caractéristiques caractérisantes d'au moins l'une des revendications 1 à 25.

29. Appareil pour positionner deux corps mobiles l'un par rapport à l'autre comprenant un dispositif pour détecter la position relative des corps selon l'une des revendications 1 à 25.
